# EUROPEAN PATENT APPLICATION

(11) **EP 2 783 809 A2**
(43) Date of publication of application: **01.10.2014**
(21) Application number: 14158290.8
(22) Date of filing: 07.03.2014
(51) Int. Cl.: B25J 9/16

(54) **Robot system and a method for producing a to-be-processed material**

(30) Priority: 14.03.2013 JP 2013052052
(71) Applicant: Kabushiki Kaisha Yaskawa Denki, Kitakyushu-shi, Fukuoka 806-0004 (JP)
(72) Inventor: Ichimaru, Yuji, Kitakyushu-shi Fukuoka 806-0004 (JP); Horiuchi, Tomoyuki, Kitakyushu-shi Fukuoka 806-0004 (JP)
(74) Representative: Viering, Jentschura & Partner Patent- und Rechtsanwälte

(57) **Abstract**

A robot system 1 includes a first robot (120R), a second robot (120L), a stocker (300), and a controller (20). The first robot (120R) includes a first sensor (122R). The second robot (120L) includes a second sensor (122L). The stocker (300) is configured to accommodate a plurality of workpieces that are to be held by at least one of the first robot (120R) and the second robot (120L). The controller (20) is configured to control the first robot (120R) and the second robot (120L). When the first robot (120R) holds a first workpiece among the plurality of workpieces, the controller (20) is configured to control the first sensor (122R) to recognize shapes of the plurality of workpieces in the stocker (300) and control the second sensor (122L) to detect a holding state of the first workpiece held by the first robot (120R).

## Description

### BACKGROUND

### FIELD OF THE INVENTION

The present invention relates to a robot system and a method for producing a to-be-processed material.

### DISCUSSION OF THE BACKGROUND

In recent years, various proposals have been made regarding bin picking technology, by which identically shaped workpieces, such as bolts, that are randomly stored (stacked in bulk) in a stocker are taken out of the stocker for handling.

This technology includes shape recognition (three-dimensional recognition of position and posture) of the workpieces in the stocker, determination as to which workpiece to hold based on the recognition result, and taking the workpiece out of the stocker.

In some situations of the bin picking, however, the workpieces overlap in the stocker in such a complicated manner that the to-be-held portion of the workpiece is hidden. For this and other reasons, it may not be possible to suitably hold the workpiece. As a result, the held workpiece may not be forwarded to the next step in a suitable holding state, leaving a possibility of degraded accuracy of workpiece handling work.

In view of this, in addition to the use of a shape sensor for shape recognition of the workpieces in the stocker, it is necessary to detect whether the holding state of the held workpiece is suitable.

The contents of Japanese Unexamined Patent Application Publication No. 2011-183537 are incorporated herein by reference in their entirety.

As a result of extensive research and study, the inventors have found a technique that ensures efficiency in the shape sensor's shape recognition of the workpieces in the stocker and detection of the holding state of a held workpiece.

The present disclosure has been made to solve the above-described problems, and it is an object of the present disclosure to provide a robot system and a method for producing a to-be-processed material that improve efficiency in workpiece handling work.

### SUMMARY

According to one aspect of the present disclosure, a robot system 1 includes a first robot 120R, a second robot 120L, a stocker 300, and a controller 20. The first robot 120R includes a first sensor 122R. The second robot 120L includes a second sensor 122L. The stocker 300 is configured to accommodate a plurality of workpieces that are to be held by at least one of the first robot 120R and the second robot 120L. The controller 20 is configured to control the first robot 120R and the second robot 120L. When the first robot 120R holds a first workpiece among the plurality of workpieces, the controller 20 is configured to control the first sensor 122R to recognize shapes of the plurality of workpieces in the stocker 300 and control the second sensor 122L to detect a holding state of the first workpiece held by the first robot 120R.

According to another aspect of the present disclosure, a method for producing a to-be-processed material includes holding a first workpiece among a plurality of workpieces accommodated in a stocker 300 using a first robot 120R. In response to the holding step of holding the first workpiece using the first robot 120R, shapes of the plurality of workpieces in the stocker 300 are recognized using a first sensor 122R mounted to the first robot 120R. Simultaneously with the recognizing step of recognizing the shapes of the plurality of workpieces in the stocker 300 using the first sensor 122R, a holding state of the first workpiece held by the first robot 120R is detected using a second sensor 122L mounted to a second robot 120L.

The present disclosure provides a robot system and a method for producing a to-be-processed material that improve efficiency in workpiece handling work.

### BRIEF DESCRIPTION OF THE DRAWINGS

A more complete appreciation of the present disclosure and many of the attendant advantages thereof will be readily obtained as the same becomes better understood by reference to the following detailed description when considered in connection with the accompanying drawings, wherein:
FIG. 1 is a view of a robot system according to an embodiment, schematically illustrating a configuration of the robot system;
FIG. 2 is an enlarged view of main elements of the robot system shown in FIG. 1;
FIG. 3 illustrates a step in workpiece handling work;
FIG. 4 illustrates another step in the workpiece handling work;
FIG. 5 illustrates another step in the workpiece handling work;
FIG. 6 illustrates another step in the workpiece handling work;
FIG. 7 shows a flow of the workpiece handling work;
FIG. 8 illustrates comparative workpiece handling work;
FIG. 9 shows a flow of the comparative workpiece handling work;
FIG. 10 illustrates another step in the workpiece handling work;
FIG. 11 illustrates another step in the workpiece handling work;
FIG. 12 illustrates another step in the workpiece handling work;
FIG. 13 illustrates another step in the workpiece handling work;
FIG. 14 illustrates another step in the workpiece handling work;
FIG. 15 illustrates another step in the workpiece handling work;
FIG. 16 illustrates another step in the workpiece handling work;
FIG. 17 illustrates another step in the workpiece handling work; and
FIG. 18 is a table of a flow of the steps shown in FIGs. 10 to 17.

### DESCRIPTION OF THE EMBODIMENTS

The embodiments will now be described with reference to the accompanying drawings, wherein like reference numerals designate corresponding or identical elements throughout the various drawings.

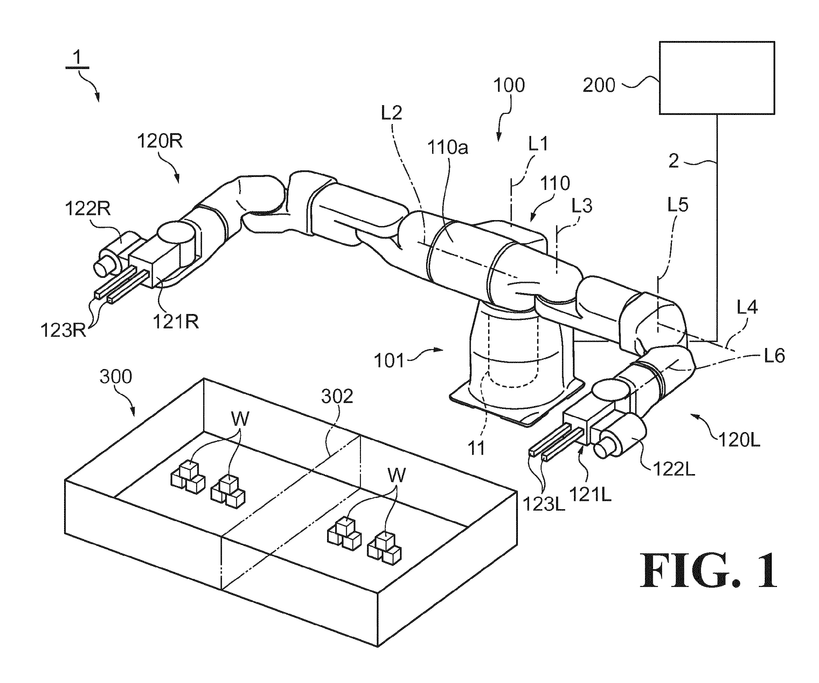

As shown in FIG. 1, a robot system 1 includes a two-arm robot 100, a robot controller 200 to control the two-arm robot 100, and a stocker 300. The two-arm robot 100 holds (holds) one workpiece W at a time from the stocker 300.

The two-arm robot 100 and the robot controller 200 are coupled to one another in a mutually communicative manner through a cable harness 2. The two-arm robot 100 and the robot controller 200 may also be coupled to one another wirelessly, or the robot controller 200 may be built in the two-arm robot 100.

The two-arm robot 100 includes a base 101, a body 110, a right arm (first robot) 120R, and a left arm (second robot) 120L. In the following description, the terms "upper" and "lower" will refer to directions that are based on the base 101 being placed on a horizontal surface.

The body 110 is mounted on an upper end of the base 101. The body 110 is driven by an actuator 11 built in the base 101 into rotation about a vertical axis L1.

On the upper end of the body 110, an arm support 110a is disposed to support the arms 120L and 120R. The arm support 110a has a solid cylindrical outer shape in horizontal orientation. The arm support 110a has a center axis L2, which is displaced in one direction in plan view from the rotational axis L1 of the body 110. In the following description, the terms "front", "rear", "left", and "right" will refer to directions that are based on the front being the direction in which the center axis L2 is displaced from the rotational axis L1.

The two arms 120L and 120R are mounted on the respective ends of the arm support 110a. Each of the arms 120L and 120R has a multi-articular structure that enables rotation about four axes (L3 to L6), that is, a total of six degrees of freedom with the axes L1 and L2 included.

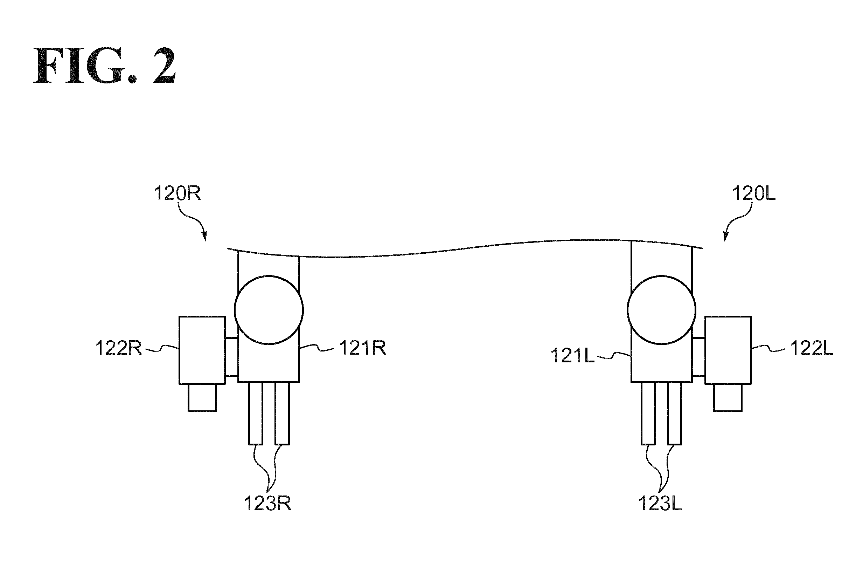

As shown in FIG. 2, the arms 120R and 120L respectively include holding devices 121R and 121L on the respective distal ends of the arms 120R and 120L.

The holding devices 121R and 121L respectively include a pair of fingers 123R and a pair of fingers 123L. The fingers 123R and the fingers 123L are respectively mounted on the holding devices 121R and 121L such that the fingers 123R and the fingers 123L are elongate in directions parallel to the directions in which the holding devices 121R and 121L are elongate. Each pair of the fingers 123R and the fingers 123L is openable and closable by an actuator that expands and diminishes the gap between each pair. Each of the holding devices 121R and 121L is rotatable by a corresponding actuator about an axis oriented along the direction in which each holding device is elongate. The robot controller 200 controls the open-close operation of the fingers 123R and the fingers 123L and the rotation of the holding devices 121R and 121L.

Cameras 122R and 122L are respectively mounted on the holding devices 121R and 121L. Specifically, the first camera 122R is mounted on the holding device 121R of the right arm 120R, while the second camera 122L is mounted on the holding device 121L of the left arm 120L. The cameras 122R and 122L are respectively mounted on the holding devices 121R and 121L such that the cameras 122R and 122L each have their imaging axis oriented in parallel to the directions in which the holding devices 121R and 121L are elongate. Thus, the directions in which the holding devices 121R and 121L are elongate, the directions in which the fingers 123R and the fingers 123L are elongate, and the imaging axes of the cameras 122R and 122L are parallel to each other.

The cameras 122R and 122L are three-dimensional cameras capable of obtaining images (pixel arrangement data) and distance information on an image. Each of the cameras 122R and 122L includes a built-in camera controller, not shown. The camera controller performs analysis processing of a picked-up image. As described later, the analysis processing of an image includes shape recognition of the workpieces W in the stocker 300 and detection of the holding state of a workpiece W1.

The stocker 300 is a box made of metal, resin, or other material. In the stocker 300, the plurality of workpieces W are randomly disposed (stacked in bulk). While the workpieces W stacked in bulk in the stocker 300 are cubic in FIG. 1, any other shapes are also possible (examples including a bolt shape, a bar shape, and a spherical shape). In some cases, some tens or hundreds of the workpieces W are put in multiple stacks. In this embodiment, however, only a few workpieces W in one or two stacks are shown for the convenience of description and illustration. Also in the stocker 300, a partition 302 may separate the workpieces W into first workpieces W to be held by the right arm 120R and second workpieces W to be held by the left arm 120L. The first workpieces W to be held by the right arm 120R and the second workpieces W to be held by the left arm 120L may have the same or different dimensions and shapes.

A procedure for the work of handling the workpieces W (workpiece handling work) using the robot system 1 will be described below.

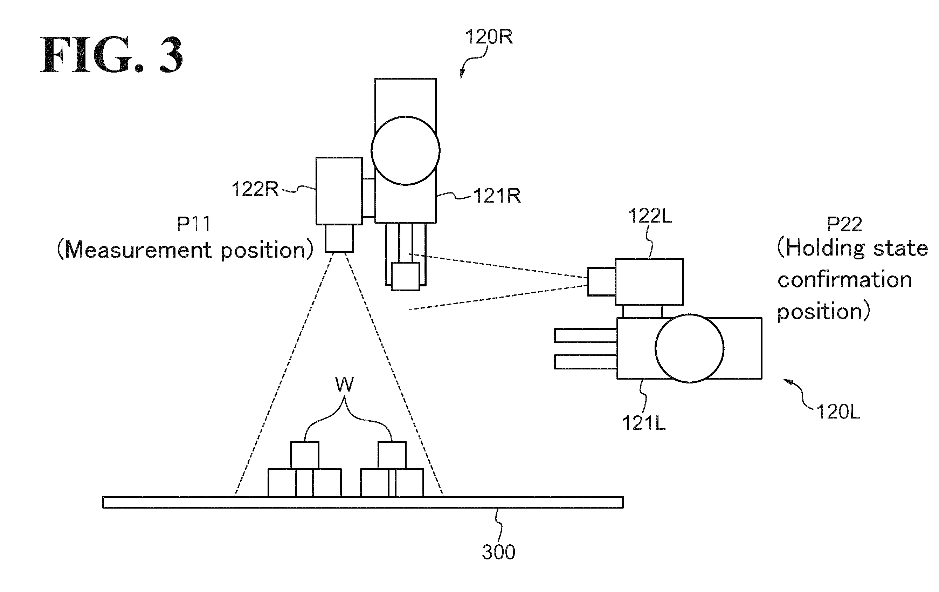

First, the robot controller 200 controls the right arm 120R and the left arm 120L into an exemplary arrangement shown in FIG. 3.

In the arrangement shown in FIG. 3, the right arm 120R is disposed at a measurement position (P11). The measurement position is a position over the stocker 300 where the first camera 122R picks up an image of the inside of the stocker 300 for shape recognition of the workpieces W.

At the measurement position, the holding device 121R of the right arm 120R is faced in the vertically lower direction with the fingers 123R faced in the vertically lower direction accordingly. Thus, the first camera 122R faces the stocker 300 below. As a result, as shown in FIG. 3, while the holding device 121R of the right arm 120R is holding the workpiece W1, the holding device 121R supports the workpiece W1 from above in a dangling manner.

The shape recognition of the workpieces W is processing that includes: detecting shapes, orientations, and heights of the plurality of workpieces W stored in the stocker 300 from, for example, an image and distance information obtained by imaging; and based on the detection result, selecting a candidate (candidate workpiece) next to be held by the right arm 120R. The result of the shape recognition is transmitted to the robot controller 200.

In the arrangement shown in FIG. 3, the left arm 120L is disposed at a holding state confirmation position (P22). The holding state confirmation position is a position where the second camera 122L picks up an image of the workpiece W1 held by the right arm 120R disposed at the measurement position, and confirms the holding state of the workpiece W1. Specifically, the left arm 120L is disposed such that the second camera 122L is at the same height as the height position of the workpiece W1, and that the second camera 122L, which is now oriented in a horizontal direction, faces the workpiece W1.

The detection of the holding state of the workpiece W1 is processing that includes detecting the state in which the workpiece W1 is being held by the holding device 121R from an image and distance information obtained by imaging. Examples to be detected include position and posture (inclination angle) of the held workpiece W1. As necessary, it is possible to determine acceptability of the holding state of the workpiece W1 based on the detected position and/or posture. The detection result of the holding state is also transmitted to the robot controller 200.

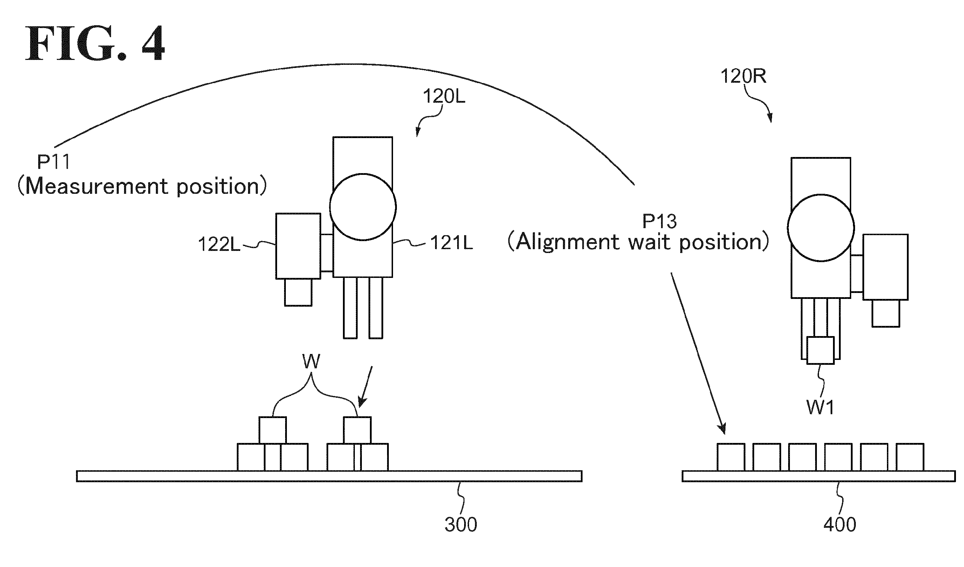

In the arrangement shown in FIG. 3, when the detection of the holding state of the workpiece W1 held by the right arm 120R is completed, then as shown in FIG. 4, the right arm 120R is transferred from the measurement position (P11) to an alignment wait position (P13) with the workpiece W1 held by the right arm 120R. The alignment wait position is a position in the next tact where workpieces W1 are kept waiting in alignment with each other on a predetermined stage 400. Here, when a candidate workpiece in the stocker 300 to be held by the left arm 120L is already determined while the right arm 120R is being transferred from the measurement position (P11) to the alignment wait position (P13), then the left arm 120L performs a holding operation of the candidate workpiece.

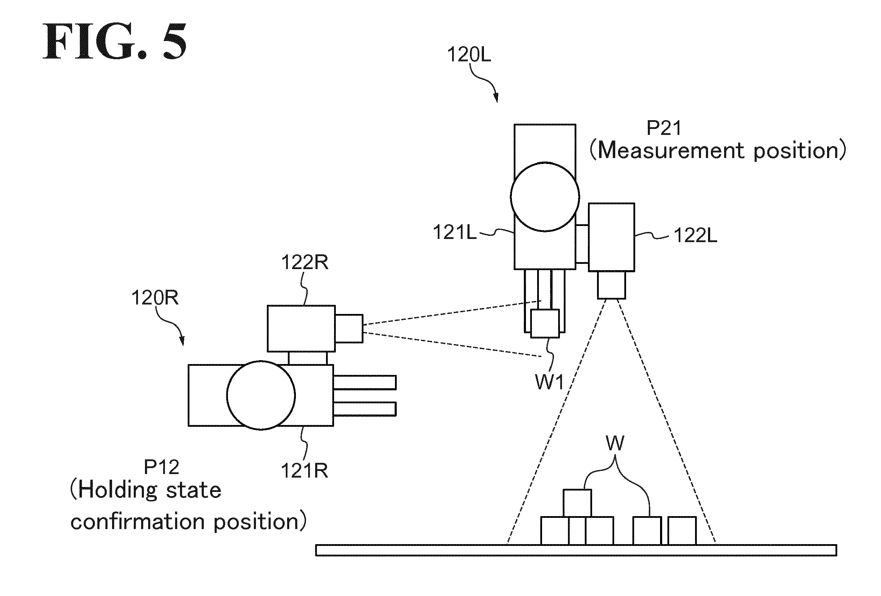

Next, the robot controller 200 controls the right arm 120R and the left arm 120L into an exemplary arrangement shown in FIG. 5.

In the arrangement shown in FIG. 5, the right arm 120R is disposed at the holding state confirmation position (P12), as opposed to the arrangement shown in FIG. 3, while the left arm 120L is disposed at a measurement position (P21).

Specifically, at the holding state confirmation position, the right arm 120R has its first camera 122R pick up an image of the workpiece W1 held by the left arm 120L disposed at the measurement position, and confirm the holding state of the workpiece W1. More specifically, the right arm 120R is disposed such that the first camera 122R is at the same height as the height position of the workpiece W1, and that the first camera 122R, which is now oriented in a horizontal direction, faces the workpiece W1. The detection result of the holding state is also transmitted to the robot controller 200.

At the measurement position, the second camera 122L of the left arm 120L over the stocker 300 performs shape recognition of the workpieces W in the stocker 300. The result of the shape recognition is transmitted to the robot controller 200. Here, the holding device 121L of the left arm 120L is faced in the vertically lower direction with the fingers 123L faced in the vertically lower direction accordingly. Thus, the second camera 122L faces the stocker 300 below. As a result, as shown in FIG. 5, while the holding device 121L of the left arm 120L is holding the workpiece W1, the holding device 121L supports the workpiece W1 from above in a dangling manner.

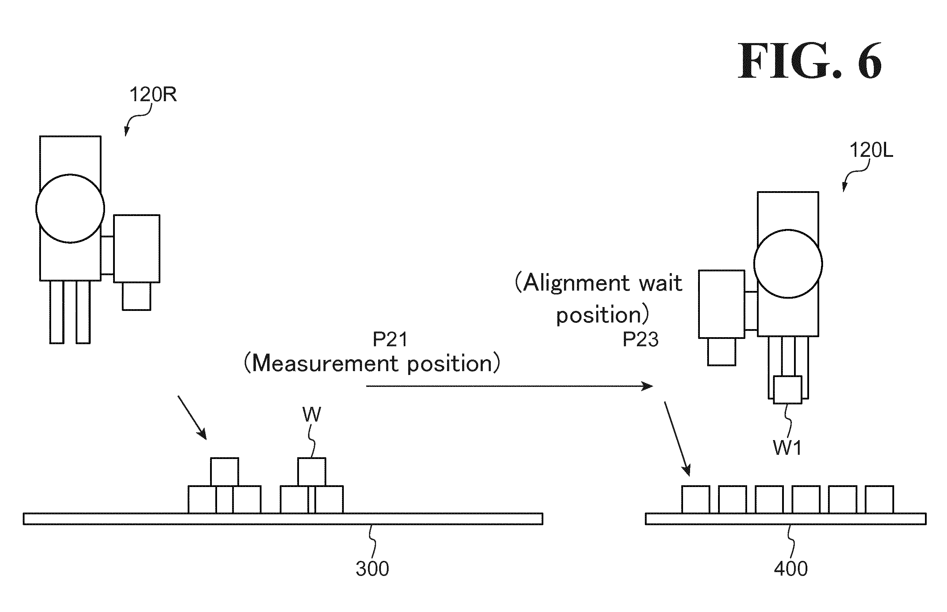

In the arrangement shown in FIG. 5, when the detection of the holding state of the workpiece W1 held by the left arm 120L is completed, then as shown in FIG. 6, at this time the left arm 120L is transferred from the measurement position (P21) to the alignment wait position (P 23) with the workpiece W1 held by the left arm 120L. Then, in the next tact, the left arm 120L aligns the workpiece W1 on the predetermined stage 400. Here, when a candidate workpiece in the stocker 300 to be held by the right arm 120R is already determined while the left arm 120L is being transferred from the measurement position to the alignment wait position, then the right arm 120R performs a holding operation of the candidate workpiece.

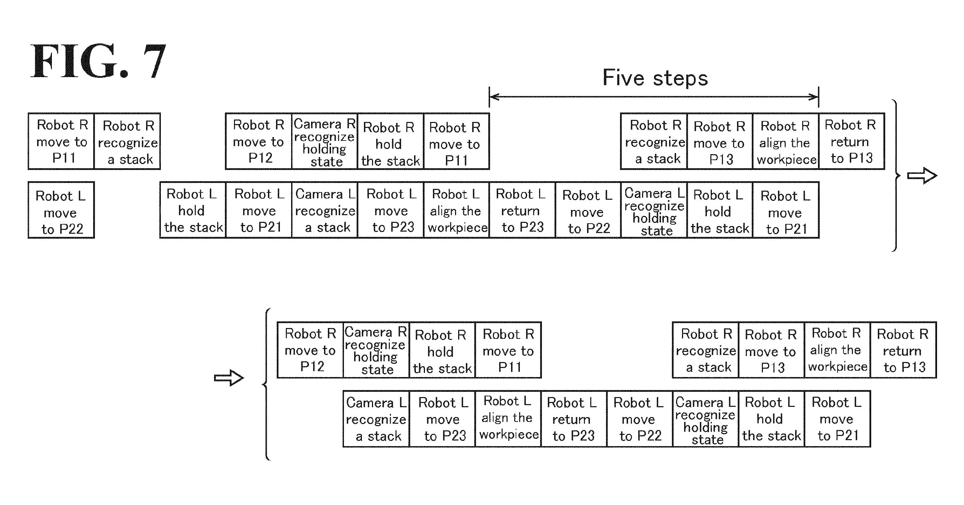

In the robot system 1, arranging the arms 120R and 120L in the above-described manner ensures workpiece handling work in accordance with the flow shown in FIG. 7. In the flow shown in FIG. 7, the blocks aligned in the left-to-right direction each denote a tact to be performed, with the upper blocks denoting those tacts for the right arm 120R (denoted "robot R" in FIG. 7) and the lower blocks denoting those tacts for the left arm 120L (denoted "robot L" in FIG. 7).

As clearly seen from the flow shown in FIG. 7, the arms 120R and 120L perform the workpiece alignment work in a cycle of five steps. That is, one piece of alignment work is made up of five tacts performed before the piece of next alignment work is performed. Employing a cycle of five steps is for the purpose of simultaneous progress of one arm's camera performing the work of shape recognition of the workpieces in the stocker 300 and the other arm's camera performing the work of detecting the holding state of the workpiece held by the one arm, as seen in the arrangement shown in FIG. 3 and the arrangement shown in FIG. 5.

As has been described hereinbefore, the robot system 1 includes the right arm (first robot) 120R, the left arm (second robot) 120L, the stocker 300, and the robot controller (controller) 20. The right arm 120R includes the first camera (first sensor) 122R. The left arm 120L includes the second camera (second sensor) 122L. The stocker 300 accommodates a plurality of workpieces W to be held by the arms 120R and 120L. The robot controller (controller) 20 controls the two-arm robot 100, which includes the arms 120R and 120L. As described above, the robot controller 200 controls the right arm 120R and the left arm 120L, each of which includes a camera, to cooperate with one another to efficiently perform shape recognition of the workpieces and detect the holding state of a workpiece. Thus, efficiency in the workpiece handling work improves.

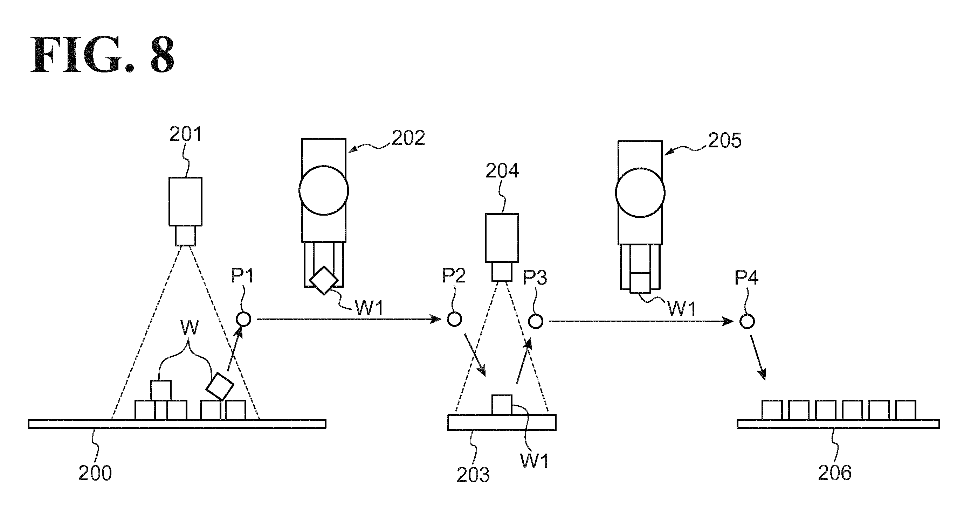

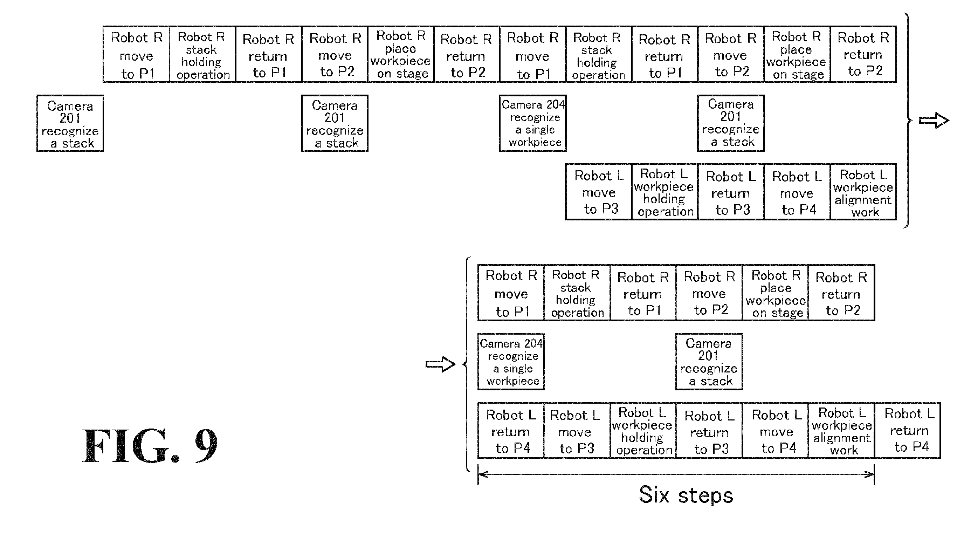

Contrarily, comparative robot systems have lacked efficiency in the workpiece handling work, which will be described by referring to FIGs. 8 and 9.

In comparative workpiece handling work, first, a camera 201 secured to the cover or some other part of a robot system performs shape recognition of the workpieces W in the stocker 300. Upon completion of the shape recognition, a right arm 202 moves to a holding wait position (P1). Then, upon completion of a holding operation of a workpiece W, the right arm 202 returns to the holding wait position (P1). Next, the right arm 202 moves to a wait position (P2) for placement on a stage (temporary table) 203 and places the held workpiece W1 onto the stage 203. Over the stage 203, a camera 204 separate from the camera 201 is disposed. The camera 204 recognizes the shape of the single workpiece W1. This is for the purpose of accurate shape recognition of the workpiece W1.

Upon completion of the shape recognition, a left arm 205 moves to a holding wait position (P3). Then, upon completion of a holding operation of the workpiece W1, the left arm 205 returns to the holding wait position (P3). Lastly, the left arm 205 moves to a wait position (P4) for alignment on an alignment stage 206 and places the held workpiece W1 on the stage 206. Upon completion of the alignment work of the workpiece W1, the left arm 205 returns to the alignment wait position (P4).

This comparative workpiece handling work can be represented by the flow shown in FIG. 9. In the flow shown in FIG. 9, the blocks aligned in the left-to-right direction each denote a tact to be executed, with the upper blocks denoting those tacts for the right arm 202 (denoted "robot R" in FIG. 9), the middle blocks denoting those tacts for the cameras 201 and 204, and the lower blocks denoting those tacts for the left arm 205 (denoted "robot L" in FIG. 9).

As clearly seen from the flow shown in FIG. 9, the arms 202 and 205 perform the workpiece alignment work in a cycle of six steps. That is, one piece of alignment work is made up of six tacts performed before the piece of next alignment work is performed.

The robot system 1 is capable of performing the alignment work in a cycle of five steps and thus improves efficiency in the workpiece handling work, as compared with the comparative robot system, which performs the alignment work in a cycle of six steps.

In addition, the robot system 1 eliminates the need for a temporary table inherent in the comparative robot system, and thus saves space. In the robot system 1, the temporary table is not necessary because with one arm in holding state, the camera of the other arm detects the holding state.

Based on the detected holding state of the workpiece W1, the arms 120R and 120L are capable of performing a correction (such as position correction and posture correction) of the workpiece W1 and then aligning the workpiece W1 on the stage 400.

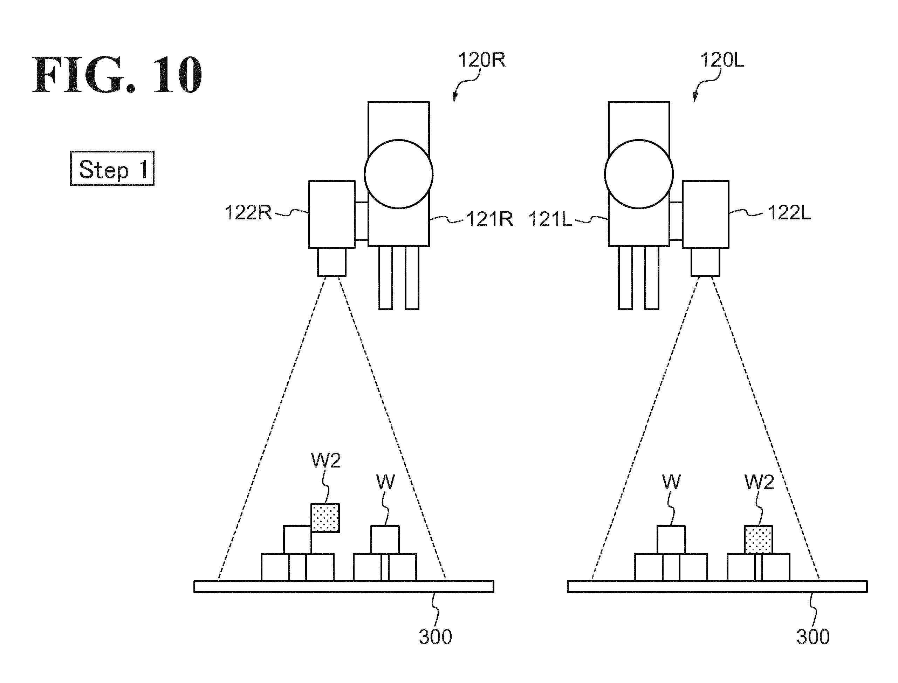

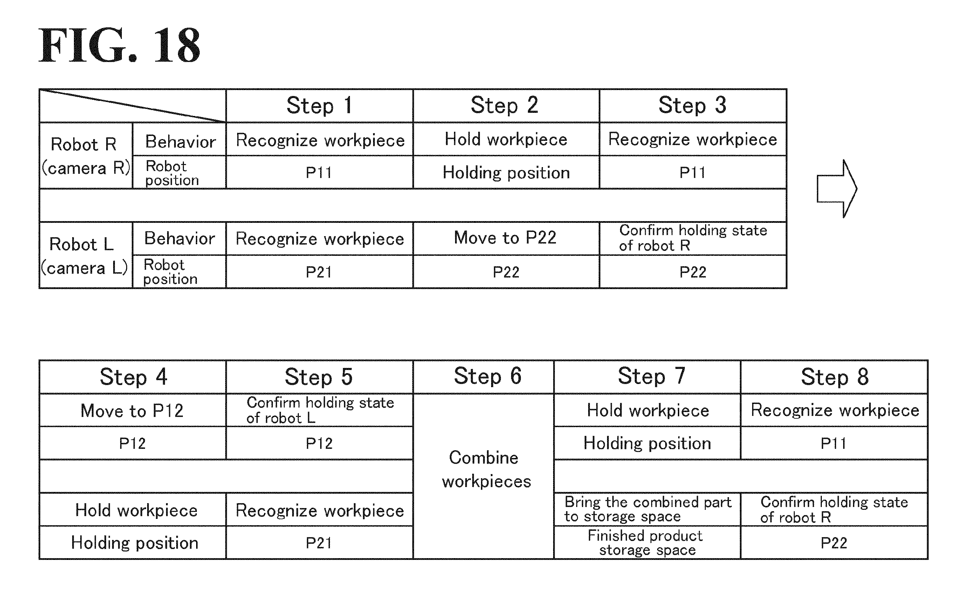

Next, by referring to FIGs. 10 to 18, description will be made with regard to an embodiment of the workpiece handling work by the robot system 1, in which two workpieces W1 on the arms 120R and 120L are combined together and aligned on the stage 400. FIG. 18 is a table of a flow of steps, and FIGs. 10 to 17 illustrate states of the arms 120R and 120L in the steps.

As shown in FIG. 10, at step 1, the right arm 120R is positioned at the measurement position (P11) to perform shape recognition of the workpieces W in the stocker 300. The left arm 120L is positioned at the measurement position (P21) to perform shape recognition of the workpieces W in the stocker 300. As a result, a first candidate workpiece W2 and a second candidate workpiece W2 that are next to be held by the right arm 120R and the left arm 120L, respectively, are determined from among the plurality of workpieces W in the stocker 300.

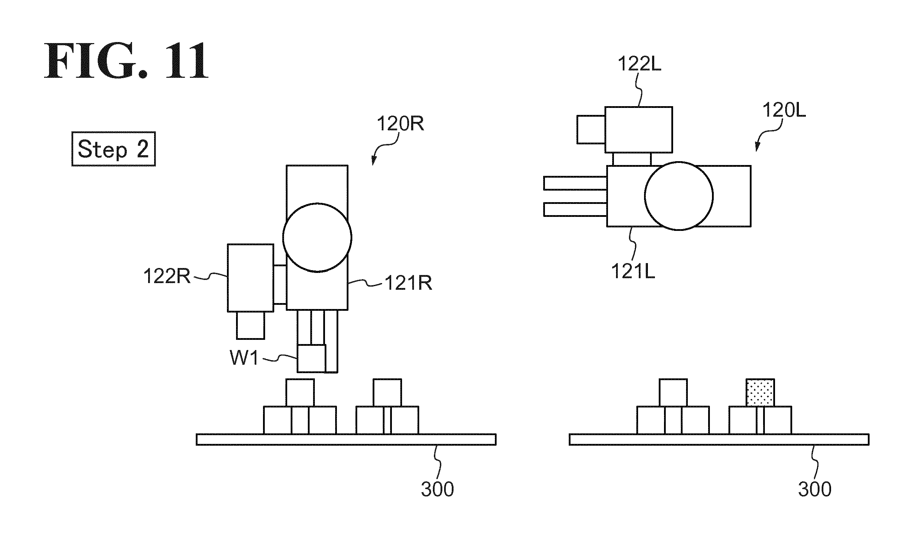

As shown in FIG. 11, at step 2, the right arm 120R has its holding device 121R hold the first candidate workpiece W2, while the left arm 120L moves to the holding state confirmation position (P22).

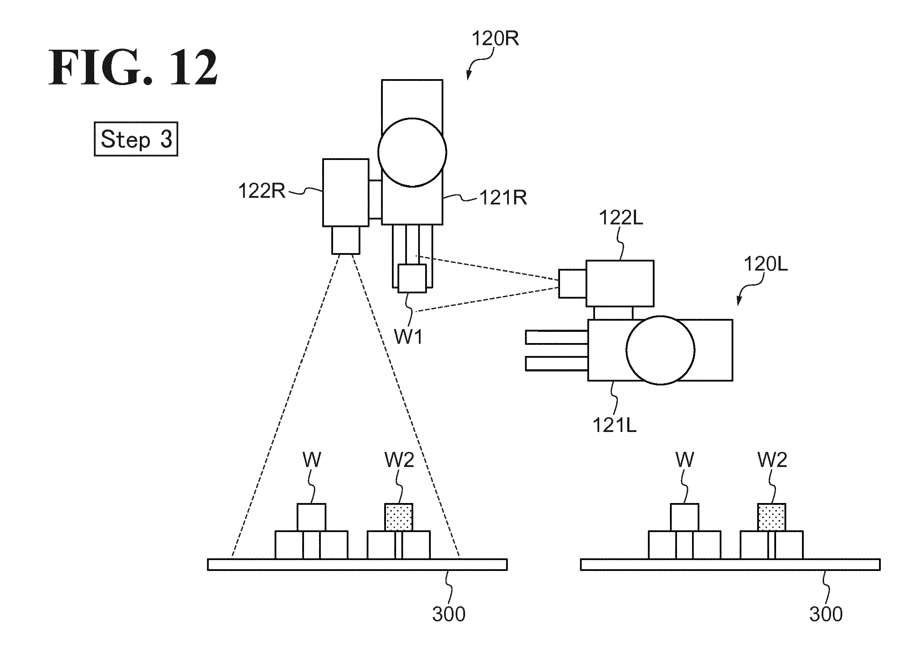

As shown in FIG. 12, at step 3, the right arm 120R returns to the measurement position (P11) to again perform shape recognition of the workpieces W in the stocker 300. The left arm 120L, which is now positioned at the holding state confirmation position (P22), detects the holding state of the workpiece W1 held by the right arm 120R.

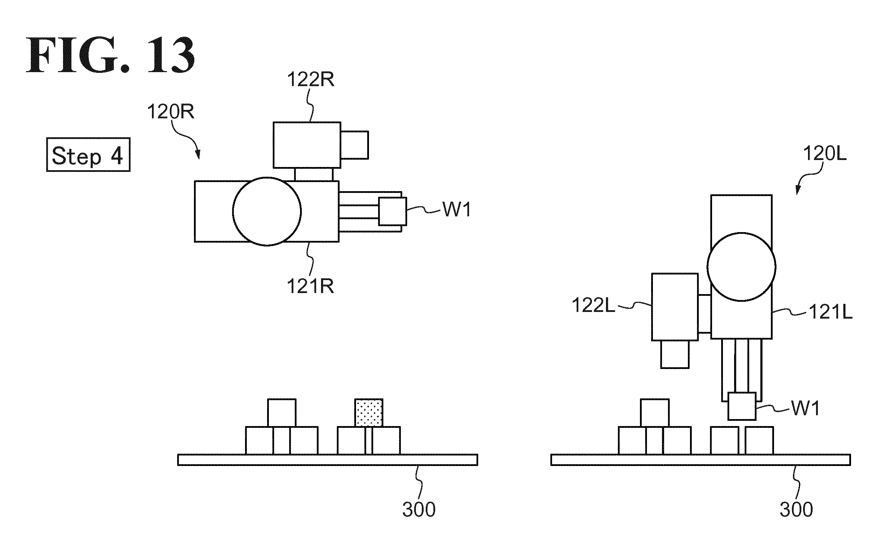

As shown in FIG. 13, at step 4, the right arm 120R moves to the holding state confirmation position (P12), while the left arm 120L has its holding device 121L hold the second candidate workpiece W2 determined at step 1.

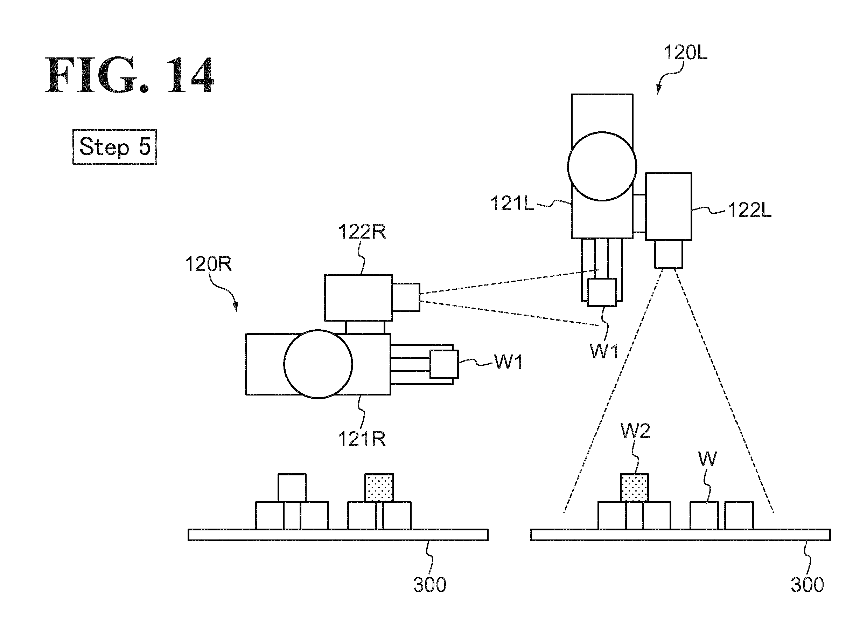

As shown in FIG. 14, at step 5, the right arm 120R, which is now positioned at the holding state confirmation position (P12), detects the holding state of the workpiece W1 held by the left arm 120L.
The left arm 120L is positioned at the measurement position (P21) to again perform shape recognition of the workpieces W in the stocker 300.

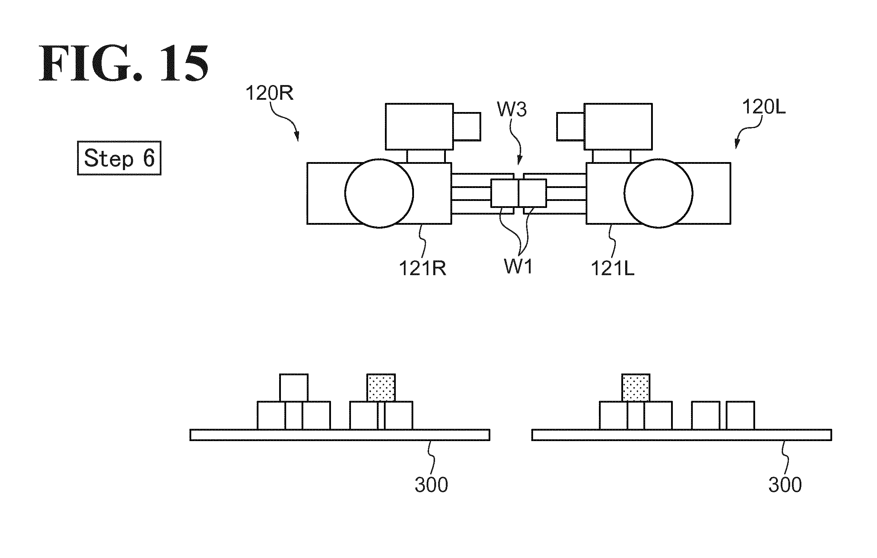

As shown in FIG. 15, at step 6, the holding device 121R of the right arm 120R and the holding device 121L of the left arm 120L are made to face and approach one another. Thus, the workpieces W1 respectively held by the holding device 121R and the holding device 121L are combined together, resulting in a part W3. At the time of the combining operation, it is possible to perform a correction (such as position correction and posture correction) of the workpieces W1 based on the already detected holding states. This eliminates the need for re-holding the workpieces W1 when the workpieces W1 are in unsuitable holding states, and thus ensures an accurate combining operation. This, in turn, shortens time as compared with the embodiment that involves re-holding of the workpieces W1 when the workpieces W1 are in unsuitable holding states. The correction may be at least one of position correction and posture correction.

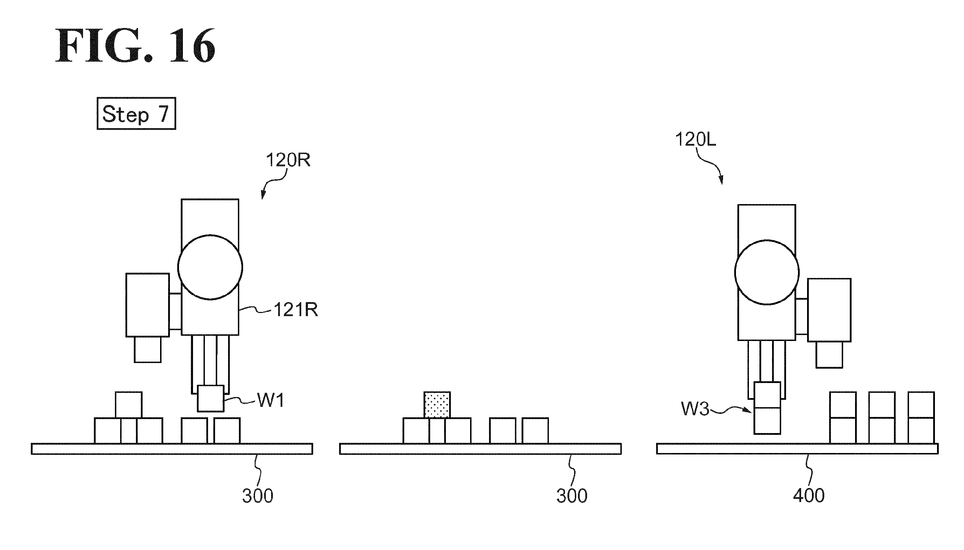

As shown in FIG. 16, at step 7, the right arm 120R has its holding device 121R hold the first candidate workpiece W2 determined at step 3. The left arm 120L places the part W3 at a predetermined position on the stage (finished product storage space) 400.

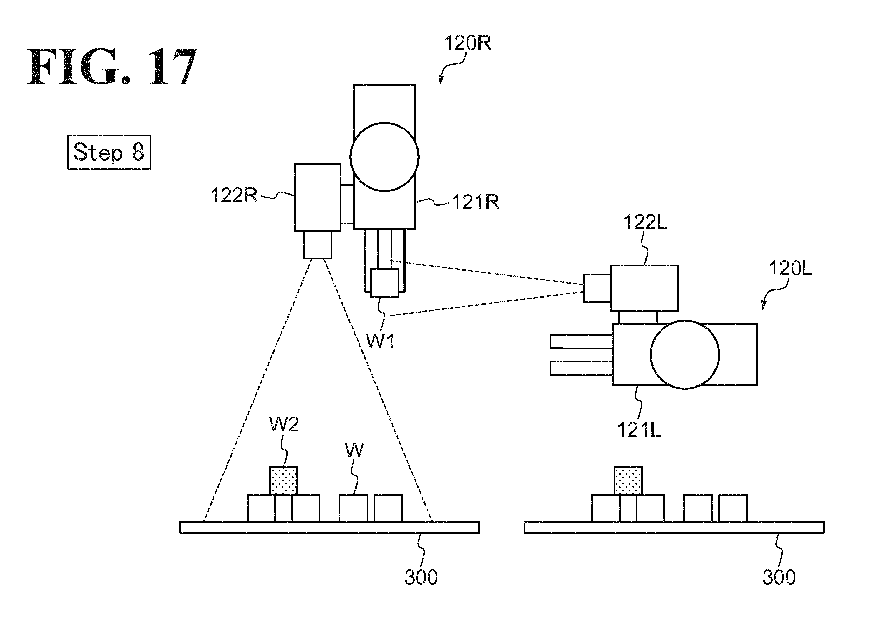

As shown in FIG. 17, at step 8, the right arm 120R is positioned at the measurement position (P11) to again perform shape recognition of the workpieces W in the stocker 300. The left arm 120L at the holding state confirmation position (P22) detects the holding state of the workpiece W1 held by the arm 120R.

Then, steps 4 to 8 are repeated, and this ensures continuous alignment work of the part W3.

The workpiece handling work shown in FIGs. 10 to 18 also ensures simultaneous progress of one arm's camera performing the work of shape recognition of the workpieces in the stocker 300 and the other arm's camera performing the work of detecting the holding state of the workpiece held by the one arm, as seen in the arrangements shown in FIG. 14 (step 5) and FIG. 17 (step 8).

That is, even in the workpiece handling work shown in FIGs. 10 to 18, the robot system 1 ensures that the right arm 120R and the left arm 120L, each of which includes a camera, cooperate with one another to efficiently perform shape recognition of the workpieces and detect the holding state of a workpiece. Thus, efficiency in the workpiece handling work improves.

Similar advantageous effects are obtained in a method for producing a to-be-processed material when a workpiece W is obtained using the robot system 1 and a to-be-processed material is obtained using the workpiece W. The to-be-processed material may be any article obtained using a workpiece W transferred or processed, such as in a combining operation, by the robot system 1. The to-be-processed material may be the workpiece W itself. Examples of the to-be-processed material include parts such as bolts and assembled structures such as automobiles.

Obviously, numerous modifications and variations of the present disclosure are possible in light of the above teachings. It is therefore to be understood that within the scope of the appended claims, the present disclosure may be practiced otherwise than as specifically described herein.

For example, the cameras 122R and 122L will not be limited to three-dimensional cameras; any other known two-dimensional cameras or three-dimensional sensors are possible insofar as the sensors are capable of performing shape recognition of the workpieces W in the stocker 300 and detecting the holding state of the held workpiece W1. In the case of a two-dimensional camera, it is possible to rotate the holding devices 121R and 121L so as to enable the two-dimensional camera to detect the holding state of the workpiece W1 three-dimensionally (sterically).

While in the above-described embodiment the right arm has been illustrated as the first robot and the left arm has been illustrated as the second robot, an opposite relationship is also possible (that is, the right arm may be the second robot and the left arm may be the first robot). The holding devices 121R and 121L may include, insofar as they are able to hold the workpiece W, a pair of fingers 10A, may include a finger swingable to grasp the workpiece W, or may use pneumatic or electromagnetic force to suck the workpiece W.

1 ... Robot system; 100 ... Two-arm robot; 120R, 120L ... Arm; 121R, 121L ... Holding device; 122R, 122L ... Camera; 123R, 123L ... Finger; 200 ... Robot controller; 300 ... Stocker; 400 ... Stage; W, W1, W2 ... Workpiece; W3 ... Part.

## Claims

1. A robot system (1), **characterized by**:
a first robot (120R) comprising a first sensor (122R);
a second robot (120L) comprising a second sensor (122L);
a stocker (300) configured to accommodate a plurality of workpieces that are to be held by at least one of the first robot (120R) and the second robot (120L); and
a controller (20) configured to control the first robot (120R) and the second robot (120L), the controller (20) being configured to, when the first robot (120R) holds a first workpiece among the plurality of workpieces, control the first sensor (122R) to recognize shapes of the plurality of workpieces in the stocker (300) and control the second sensor (122L) to detect a holding state of the first workpiece held by the first robot (120R).

2. The robot system 1 according to claim 1, wherein when the second robot (120L) holds a second workpiece among the plurality of workpieces, the controller (20) is configured to control the second sensor (122L) to recognize the shapes of the plurality of workpieces in the stocker and control the first sensor (122R) to detect a holding state of the second workpiece held by the second robot (120L).

3. The robot system 1 according to claim 2, wherein the controller (20) is configured to control the first robot (120R) and the second robot (120L) to respectively hold the first workpiece and the second workpiece after the holding state of the first workpiece and the holding state of the second workpiece have been detected, configured to correct at least one of a position and a posture of each of the first workpiece and the second workpiece, and configured to combine the first workpiece and the second workpiece together.

4. A method for producing a to-be-processed material, comprising:
holding a first workpiece among a plurality of workpieces accommodated in a stocker (300) using a first robot (120R);
in response to the holding step of holding the first workpiece using the first robot (120R), recognizing shapes of the plurality of workpieces in the stocker (300) using a first sensor (122R) mounted to the first robot (120R); and
simultaneously with the recognizing step of recognizing the shapes of the plurality of workpieces in the stocker (300) using the first sensor (122R), detecting a holding state of the first workpiece held by the first robot (120R) using a second sensor (122L) mounted to a second robot (120L).

5. The method for producing a to-be-processed material according to claim 4, further comprising, in response to the holding step of holding the first workpiece using the first robot (120R), recognizing the shapes of the plurality of workpieces in the stocker (300) using the first sensor (122R), and detecting the holding state of the first workpiece held by the first robot (120R) using the second sensor (122L).

6. The method for producing a to-be-processed material according to claim 5, further comprising, controlling the first robot (120R) and the second robot (120L) to respectively hold the first workpiece and a second workpiece after the holding state of the first workpiece and a holding state of the second workpiece have been detected, and then controlling the first robot (120R) and the second robot (120L) to correct at least one of a position and a posture of each of the first workpiece and the second workpiece and to combine the first workpiece and the second workpiece together.
